# EUROPÄISCHE PATENTSCHRIFT

(11) **EP 3 359 605 B1**
(45) Veröffentlichungstag und Bekanntmachung des Hinweises auf die Patenterteilung: **06.11.2019**
(21) Anmeldenummer: 16775491.0
(22) Anmeldetag: 15.09.2016
(51) Int. Cl.: C09B 67/46, C09D 5/02, C09D 17/00, C08K 5/17

(54) **UNIVERSELLE PIGMENTDISPERSIONEN AUF BASIS VON N-ALKYLGLUKAMINEN**
N-ALKYL GLUCAMINE-BASED UNIVERSAL PIGMENT DISPERSIONS
DISPERSIONS PIGMENTAIRES UNIVERSELLES À BASE DE N-ALKYLGLUCAMINES

(30) Priorität: 09.10.2015 DE 102015219608
(43) Veröffentlichungstag der Anmeldung: 15.08.2018
(73) Patentinhaber: Clariant International Ltd, 4132 Muttenz (CH)
(72) Erfinder: KUPFER, Rainer, 65795 Hattersheim (DE); SÖFFING, Christoph, 40822 Mettmann (DE); RÜGER, Jörg, 63773 Goldbach (DE)
(74) Vertreter: Mikulecky, Klaus
(86) Internationale Anmeldenummer: PCT/EP2016/071750
(87) Internationale Veröffentlichungsnummer: WO 2017/060051

(56) Entgegenhaltungen:
- EP-A1- 1 676 831
- WO-A1-2013/016270
- WO-A1-2014/056561
- US-A1- 2010 326 320
- US-A1- 2011 146 536

## Beschreibung

Gegenstand der vorliegenden Erfindung sind wasserbasierte, bindemittelfreie Pigmentdispersionen sowie ihre Verwendung zum Einfärben von wässrigen und lösemittelhaltigen Anstrichmittel, Dispersions- und Lackfarben aller Art.

Im Markt und in der Literatur sind eine Vielzahl von wässrigen Pigmentdispersionen, auch als Pigmentpasten bezeichnet, bekannt, die zum Einfärben von wässrigen Dispersionsfarben und Lacken verwendet werden. Diese Pigmentdispersionen kommen als Abtönpasten in Baumärkten, Farbenfabriken und Malerfachgeschäften zum Einsatz. Dazu wird mit Hilfe von Dosier- und Abtönanlagen wässrige Pigmentpaste zu wässrigen Farben und Lacken zugesetzt. Um die Kompatibilität mit den Basisfarben zu verbessern, werden die Pigmentdispersionen üblicherweise mit Basen auf einen basischen pH-Wert eingestellt. Dem Fachmann ist dazu die Verwendung von Alkali, beispielsweise NaOH oder KOH oder auch Amin-Basen, beispielsweise Alkanolamine wie 2-Amino-2-methyl-propan-1-ol (AMP-90/95, Firma Angus) hinlänglich bekannt und wird beispielsweise in US 2012/0024193 nebst sekundären Alkanolaminen, die in α-Position verzweigt sind, beschrieben.

Auch das European Coatings Journal aus 2009 Vol. 07 lehrt auf den Seiten 26 bis 28, dass blaue Pigmentpasten, die solche sekundären Alkanolamine als Neutralisations- und Co-Dispergiermittel enthalten, höhere Farbstärken generieren und führt am Beispiel von 2-(*sec*-Butylamino)ethanol (Alpamine® N41, Firma Arkema) aus, dass dadurch die Kosten für abgetönten Farben reduziert werden können.

Auch lösemittelhaltige Farben und Lacke können so eingefärbt werden. Dazu sind spezielle lösemittelbasierte Pasten im Markt erhältlich, zudem findet der Einsatz von universellen Pigmentdispersionen, die sich sowohl zum Einfärben von wässrigen als auch lösemittelhaltigen Anstrichmittel, Dispersions- und Lackfarben aller Art eignen, zunehmend Anwendung.

WO 2013/016270 lehrt VOC-freie sekundäre und tertiäre Alkanolamine, die in bindemittelhaltigen Farben eingesetzt werden und zu einer Verbesserung des Glanzes und des Nassabriebes führen.

Die Herstellung weiterer VOC-freier Aminoalkohole und deren Verwendung in bindemittelhaltigen Farben als Neutralisierungsmittel werden in US 2011/0146536 gelehrt.

Das Neutralisationsvermögen von Trihydroxy-monoaminen bzw. Trihydroxydiaminen in wässrigen, bindemittelhaltigen Farben wird in WO 2010/126657 bzw. US 2010/0326320 gelehrt. Ebenso werden die Eigenschaften der resultierenden Farben und Beschichtungen bzgl. Viskosität, Deckkraft, Vergilbung, Glanz, Nassabrieb-Beständigkeit und Haftkraft beschrieben.

EP 1676831 lehrt *N,N*-Dialkylglucamine, die in wässrige, bindemittelhaltige Druckfarben eingesetzt werden können.

US 2002/04066 lehrt wässrige, Dispergiermittel freie Druckfarben, die Alkyl-, Hydroxyalkyl- oder Arylamine enthalten.

WO 2014/056561 lehrt wässrige, bindemittelfreie Pigmentpräparationen, enthaltend (A) 1 ,0 bis 75,0 Gew.-% mindestens eines organischen oder anorganischen Weiß- oder Buntpigmentes oder eine Mischung verschiedener organischer und anorganischer Weiß- oder Buntpigmente, (B) 0,01 bis 8,0 Gew.-% mindestens eines Phosphatids, (C) 0,01 bis 12,0 Gew.-% eines Polyhydroxyfettsäureamids. Die wässrigen Pigmentpräparationen sind auch mit lösemittelhaltigen Lacken kompatibel, sie lassen sich homogen durch Mischen, Rühren oder Schütteln im Lack verteilen und sie ergeben bei Streichen oder Rollen auf Oberflächen ein ruhiges, gleichmäßiges Farbbild.

In der Praxis zeigt sich, dass diese universellen Pigmentdispersionen in lösemittelhaltigen Farben und Lacken nur eine unzureichende Kompatibilität aufweisen, die sich darin äußert, dass die eingesetzten wässrigen Pigmentdispersionen nicht ihre volle Farbstärke bzw. Deckkraft entfalten und so mehr der Pigmentdispersion zugesetzt werden muss, um den gewünschten Farbton zu erzielen. Dieser Mehrverbrauch führt zu höheren Kosten beim Einfärben von Farben und Lacken. Darüber hinaus tragen die beschriebenen Amin-Basen zur Erhöhung des VOC-Gehalts bei.

Der vorliegenden Erfindung lag daher die Aufgabe zu Grunde, wässrige bindemittelfreie Pigmentdispersionen bereitzustellen, die sowohl mit wässrigen als auch lösemittelhaltigen Beschichtungen kompatibel sind. Darüber hinaus sollten den Pigmentdispersionen keine VOC-haltigen Inhaltsstoffe zugesetzt sein.

Überaschenderweise wurde gefunden, dass wässrige bindemittelfreie Pigmentdispersionen, welche N-Alkylglucamine zur pH-Wert Einstellung und als Co-dispergiermittel verwenden, die oben genannten Aufgaben erfüllen.

Gegenstand der vorliegenden Erfindung sind wässrige Pigmentdispersionen enthaltende
(A) mindestens ein organisches und/oder anorganisches Pigment,
(B) ein oder mehrere Dispergiermittel und/oder Tenside
(C) mindestens eine Verbindung der Formel (I) 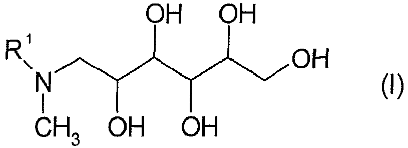 worin R¹ für H, C₁-C₄-Alkyl, CH₂CH₂OH oder CH₂CH(CH₃)OH steht,
(D) gegebenenfalls ein oder mehrere Polyalkylenglykole,
(E) gegebenenfalls weitere zur Herstellung wässriger Pigmentdispersionen übliche Zusatzstoffe und
(F) Wasser.

Bevorzugte Pigmentpräparationen enthalten an Komponenten
(A) 5 bis 80 Gew-%,
(B) 0,1 bis 30 Gew-%,
(C) 0,1 bis 10 Gew-%,
(D) 0 bis 10 Gew-%,
(E) 0 bis 30 Gew-%,
(F) Add 100%,
jeweils bezogen auf das Gesamtgewicht der Pigmentdispersion.

In einer weiteren bevorzugten Form weisen die erfindungsmäßigen Pigmentdispersionen einen pH-Wert > 7, in einer besonders bevorzugten Form einen pH-Wert zwischen 8 und 10 auf.

In einer weiteren bevorzugten Form weisen die erfindungsmäßigen Pigmentdispersionen einen VOC-Gehalt < 1% gemessen nach DIN 11890-2 auf.

Die Komponente (A) der erfindungsgemäßen Pigmentdispersion ist vorzugsweise ein feinteiliges, organisches oder anorganisches Weiß- oder Buntpigment oder ein Gemisch verschiedener solcher Pigmente. Als beispielhafte Auswahl besonders bevorzugter organischer Pigmente sind dabei Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3 Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Rußpigmente, wie z. B. Gas- oder Furnaceruße; Titandioxide, Zinksulfide, Zinkoxide, Eisenoxide, Magnetite, Manganeisenoxide, Chromoxide, Ultramarin, Nickel oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 7, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Als Komponente (B) der erfindungsmäßigen Pigmentdispersionen eigenen sich übliche polymere und tensidische Dispergiermittel oder Gemische solcher Substanzen. Üblicherweise handelt es sich dabei um nichtionische, anionische oder amphotere grenzflächenaktive Substanzen, die dem Fachmann hinlänglich bekannt sind. Von der Vielzahl der bekannten Verbindungen ist nachführend eine repräsentative Auswahl aufgeführt, ohne jedoch die Anwendbarkeit der Erfindung auf diese einzuschränken.

Als beispielhafte Auswahl besonders bevorzugter polymerer Dispergiermittel sind dabei Kondensationsprodukte von Formaldehyd mit substituierten und unsubstituierten länger und kürzerkettigen Alkylphenolen mit 1 bis 20 C-Atomen sowie deren Alkoxylierungsprodukten, den Novolaken, und Derivate; Styrol-Phenol-Kondensate einschließlich der Kondensationsprodukte aus substituierten Phenolen und Styrolen sowie deren Alkoxylierungsprodukten zu nennen. Des Weiteren können diese Kondensationsprodukte als ionische Derivate beispielsweise als Sulfate, Sulfonate, Bernsteinsäure-Halbester, Phosphate, Phosphonate oder Carboxylate und deren Salze vorliegen. Erwähnt seien auch teilweise oder vollständig neutralisierte Acrylatharze, modifizierte Polyacrylate und Copolymere aus Acrylsäure und/oder Methacrylsäure und/oder deren Ester und/oder deren Amide. Weitere Monomerbausteine für entsprechende Copolymere können Maleinsäure und/oder deren Ester, Amide und/oder Anhydride und/oder Styrol sein. Polymere Dispergiermittel weisen zumeist eine mittlere Molmasse von Mₙ zwischen 1000 und 100000 g/mol, vorzugsweise 2000 bis 50000 g/mol, auf und können als statistische oder Blockpolymere vorliegen.

Als beispielhafte Auswahl besonders bevorzugter tensidischer Dispergiermittel sind dabei lineare und verzweigte, gesättigte und ungesättigte Alkylsulfonate wie z. B. Dodecylsulfonat, Laurylsulfonat und Stearylsulfonat sowie die entsprechenden Alkylphosphate zu nennen. Ferner können Alkoxylierungsprodukte von unverzweigten oder verzweigten, linearen oder cyclischen C₃-C₂₀-Alkyl-Resten, oder substituierten oder unsubstituierten ArylResten, oder linearen Fettalkoholen, Fettsäuren, Fettaminen oder Fettamiden eingesetzt werden. Beispiele für geeignete Alkylenoxide sind Ethylenoxid, Propylenoxid, Butylenoxid oder Styroloxid. Diese Alkoxylierungsprodukte können zudem mit ionischen Kopfgruppen versehen sein, beispielsweise als Sulfate, Sulfonate, Bernsteinsäure-Halbester, Phosphate, Phosphonate oder Carboxylate und deren Salze. Darüber hinaus eignen sich Lecithine und Sulfosuccinate.

Verbindung (I) im Sinne der Komponente (C) ist ein Polyhydroxy-Amin 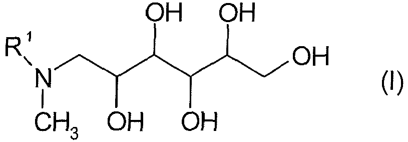 wobei R¹ H, C₁-C₄-Alkyl, CH₂CH₂OH oder CH₂CH(CH₃)OH sein kann.

Vorzugsweise ist R¹ H, Methyl oder CH₂CH₂OH.

Die Polyhydroxy-Einheit ist eine Hexose, vorzugsweise das Epimer Glukose.

Das Verfahren zur Herstellung der Alkylglukamine der Formel (I) ist dem Fachmann hinlänglich bekannt. Sie erfolgt für Verbindungen mit R = C₁- bis C₄-Alkyl beispielsweise gemäß der in EP-A-1676831 angegebenen Methode durch reduktive Alkylierung von N-Alkylpolyhydroxylaminen mit Aldehyden oder Ketonen in Gegenwart von Wasserstoff und eines Übergangsmetallkatalysators. Hydroxyethyl- und Hydroxypropyl-N-Methyl-glukamin kann durch Reaktion von N-Methylglukamin mit Ethylenoxid bzw. Propylenoxid in wässriger Lösung hergestellt werden. Die Verbindungen der Formel (I) können als Reinsubstanzen oder als wässrige Lösungen eingesetzt werden. Da die tertiären Amine, wie Dimethylglukamin, Hydroxyethyl- und Hydroxypropyl-N-Methyl-glukamin wenig anfällig für die Bildung von Nitrosaminen sind, sind diese für die erfindungsgemäßen Dispersionen zu bevorzugen.

Polyalkylenglykole, Komponente (D), der erfindungsmäßigen Dispersionen sind Homo- oder Co-Polymere von Alkylenoxiden. Beispiele für geeignete Alkylenoxide sind Ethylenoxid, Propylenoxid, Butylenoxid oder Styroloxid. Darüber hinaus können Polyalkylenglykole, die von ein-, zwei-, drei-, vier- oder fünfwertigen Alkoholen oder Aminen gestartet sind, eingesetzt werden, die eine verzweigte oder sternförmige Struktur besitzen. Die verwendeten Polyalkylenglykole enthalten üblicherweise 4 bis 1000 Mol Alkylenoxid, bevorzugt 4 bis 200 Mol.

Weitere zur Herstellung wässriger Pigmentdispersionen übliche Zusatzstoffe, Komponente (E), die zum Einsatz kommen können, sind Konservierungsmittel/Biozide, Entschäumer, Entlüfter, Füllstoffe, Lösemittel, Lichtschutzmittel, Antioxidantien oder Verdicker, Antiabsetzmittel und Rheologie-Additive. Zusätzliche Netzmittel können beispielsweise Netzmittel auf Basis von Polysiloxanethern sein.

Zur Herstellung der erfindungsgemäßen, wässrigen Pigmentdispersionen benutztes Wasser, Komponente (F), wird vorzugsweise in Form von destilliertem oder entsalztem Wasser eingesetzt. Auch Trinkwasser (Leitungswasser) und/oder Wasser natürlichen Ursprungs kann eingesetzt werden.

Ein weiterer Gegenstand der vorliegenden Erfindung ist auch ein Verfahren zur Herstellung der erfindungsgemäßen Pigmentdispersionen. Dazu wird die Komponente (A), die üblicherweise in Form von Pulver, Schuppen oder Granulat vorliegt, in Gegenwart von Wasser (F) sowie den Komponenten (B) und (C) und gegebenenfalls (D) und (E) in an sich üblicher Weise dispergiert. Anschließend kann gegebenenfalls weiteres Wasser (F) zumischt werden, um die erhaltende wässrige Pigmentdispersion auf die gewünschte Konzentration ein zustellt. Vorzugsweise werden die flüssigen Komponenten (B), (C), (F) und gegebenenfalls (D) zunächst vermischt und homogenisiert, anschließend die festen, pulverförmigen, granulierten oder schuppenförmigen Komponente (A) und (D) in die vorgelegte Mischung eingerührt, wobei das Pigment und gegebenenfalls die Füllstoffe angeteigt und vordispergiert werden. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden.

Die Feindispergierung bzw. Mahlung der Pigmente erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser (F) weiter verdünnt werden. Die Herstellung der erfindungsgemäßen Pigmentdispersionen ist aber nicht auf das Verfahren beschränkt, so kann Komponente (C) beispielsweise auch erst nach der Vermahlung zugegeben werden.

Die erfindungsgemäßen Pigmentdispersionen eignen sich zum Pigmentieren und Färben von makromolekularen Materialien aller Art. Besonders eignen sich die erfindungsgemäßen Pigmentdispersion zur Pigmentierung bzw. Herstellung von wässrigen und lösemittelhaltigen, farblosen und deckenden Anstrich- und Dispersionsfarben, Dispersionslacken, Druckfarben, hierbei beispielsweise Textildruck-, Flexodruck-, Dekordruck- oder Tiefdruckfarben,Tapetenfarben; wässrigen, wasserverdünnbaren und lösemittelhaltigen, farblosen und deckenden Lacken, Holzbeizen, Holzschutzsystemen und Lacken zur Oberflächenbeschichtung von Gegenständen aus beispielsweise Metall, Holz, Kunststoff, Glas, Keramik, Beton, Textilmaterial, Papier oder Kautschuk.

Eine besondere Eigenschaft der erfindungsgemäßen Pigmentdispersionen ist ihre Verwendung als universale Abtönpasten. Universale Abtönpasten eignen sich sowohl zum Einfärben von wässrigen Farben als auch zum Abtönen von lösemittelhaltigen Lacken. Werden wässrige Pigmentpräparationen zum Einfärben von lösemittelhaltigen Lacken verwendet, kann es zur Agglomeration der Pigmente und zum Aufschwimmen der agglomerierten Pigmente im Lack kommen und äußert sich bei Buntpigmenten durch Verlust der Farbstärke oder des Deckvermögens im Falle von Weißpigmenten.

### Beispiele

Der VOC-Gehalt einer Pigmentdispersion ist die Summe der Einzelkomponenten in einer Dispersion, die einen Siedepunkt unterhalb von 250 °C bei 101.3 kPa aufweisen. Um eine VOC-freie Pigmentdispersion zu formulieren, sollten daher nur solche Inhaltsstoffe ausgewählt werden, deren Siedepunkt größer als 250 °C ist. Bei der Verwendung von marktüblichen Aminen (Beispiele 1 und 2, Tabelle 1) tragen diese in Abhängigkeit ihrer Einsatzkonzentration zu 100 % zum VOC-Gehalt der Dispersion bei. Polyhydroxy-Amine der Formel (I) sind auf Grund ihres hohen Schmelz- und Siedepunktes VOC-arm.

**Tabelle 1: Siedepunkte von Neutralisierungsmitteln**

| Beispiel | Neutralisierungsmittel | Siedepunkt [°C] |
|---|---|---|
| 1 (V) | 2-Amino-2-methyl-propan-1-ol | 165 |
| 2 (V) | 2-(*sec*-Butylamino)ethanol | 186 |
| 3 | Verbindung der Formel (I) mit R = H | >> 250 (Schmp. 130 °C) |
| 4 | Verbindung der Formel (I) mit R = CH₃ | >> 250 (Schmp. 90 °C) |

### Herstellung einer Pigmentdispersion

Das Pigment wird, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert, vorzugsweise unter Zuhilfenahme einer Dispergierscheibe. Zur Dispergierung werden die flüssigen Komponenten, das Dispergiermittelkonzentrat enthaltend Komponenten (B) und (C) sowie weitere Komponenten (D) und (F) in einem Mahlbehälter vorgelegt und vermischt. Anschließend werden die pulverförmigen Komponenten (A) und gegebenenfalls (E) zugegeben und mit dem Dissolver vordispergiert. Die anschließende Feindispergierung erfolgt mit Hilfe einer Perlmühle (z. B. mit AE3-M1 von VMA-Getzmann) oder aber einem anderen geeigneten Dispergieraggregat, wobei die Mahlung mit Zirkonmischoxidperlen der Größe d = 1,3 - 1,7 mm unter Kühlung erfolgt. Anschließend werden die Mahlkörper abgetrennt und die Pigmentpräparation isoliert.

**Beispiel 5 (Vergleichsbeispiel):**

| | |
|---|---|
| 65,5 Teile | C.I. Pigment Red 101 (Bayferrox® Red 130, Fa. Lanxess, Komponente (A)), |
| 10,0 Teile | Mischung eines anionischen und nichtionischen Dispergiermittels (Dispersogen® AN 200, Fa. Clariant, Komponente (B)), |
| 1,1 Teile | Natronlauge (10 %-ige wässrige Lösung, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 16,9 Teile | Wasser (Komponente (F)) |

**Beispiel 6 (Vergleichsbeispiel):**

| | |
|---|---|
| 65,5 Teile | C.I. Pigment Red 101 (Bayferrox® Red 130, Fa. Lanxess, Komponente (A)), |
| 10,0 Teile | Mischung eines anionischen und nichtionischen Dispergiermittels (Dispersogen® AN 200, Fa. Clariant, Komponente (B)), |
| 0,3 Teile | 2-Amino-2-methyl-propan-1-ol (95 %-ige wässrige Lösung, AMP-95, Fa. Angus, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 17,7 Teile | Wasser (Komponente (F)) |

**Beispiel 7 (Vergleichsbeispiel):**

| | |
|---|---|
| 65,5 Teile | C.I. Pigment Red 101 (Bayferrox® Red 130, Fa. Lanxess, Komponente (A)), |
| 10,0 Teile | Mischung eines anionischen und nichtionischen Dispergiermittels (Dispersogen® AN 200, Fa. Clariant, Komponente (B)), |
| 0,4 Teile | 2-(*sec*-Butylamino)ethanol ((Alpamine® N41, Firma Arkema), Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 17,6 Teile | Wasser (Komponente (F)) |

**Beispiel 8:**

| | |
|---|---|
| 65,5 Teile | C.I. Pigment Red 101 (Bayferrox® Red 130, Fa. Lanxess, Komponente (A)), |
| 10,0 Teile | Mischung eines anionischen und nichtionischen Dispergiermittels (Dispersogen® AN 200, Fa. Clariant, Komponente (B)), |
| 1,5 Teile | Verbindung der Formel (I) mit R = H (30 %-ige wässrige Lösung, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 16,5 Teile | Wasser (Komponente (F)) |

**Beispiel 9:**

| | |
|---|---|
| 65,5 Teile | C.I. Pigment Red 101 (Bayferrox® Red 130, Fa. Lanxess, Komponente (A)), |
| 10,0 Teile | Mischung eines anionischen und nichtionischen Dispergiermittels (Dispersogen® AN 200, Fa. Clariant, Komponente (B)), |
| 1,3 Teile | Verbindung der Formel (I) mit R = CH₃ (50 %-ige wässrige Lösung, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 16,7 Teile | Wasser (Komponente (F)) |

**Beispiel 10 (Vergleichsbeispiel):**

| | |
|---|---|
| 65,5 Teile | C.I. Pigment Yellow 184 (Sicopal® Gelb L 1100, Fa. BASF, Komponente (A)), |
| 10,0 Teile | Mischung eines anionischen und nichtionischen Dispergiermittels (Dispersogen® AN 200, Fa. Clariant, Komponente (B)), |
| 1,0 Teile | Natronlauge (10 %-ige wässrige Lösung, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 17,0Teile | Wasser (Komponente (F)) |

**Beispiel 11 (Vergleichspeispiel):**

| | |
|---|---|
| 65,5 Teile | C.I. Pigment Yellow 184 (Sicopal® Gelb L 1100, Fa. BASF, Komponente (A)), |
| 10,0 Teile | Mischung eines anionischen und nichtionischen Dispergiermittels (Dispersogen® AN 200, Fa. Clariant, Komponente (B)), |
| 0,2 Teile | 2-Amino-2-methyl-propan-1-ol (95%-ige wässrige Lösung, AMP-95, |
| | Fa. Angus, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 17,8 Teile | Wasser (Komponente (F)) |

**Beispiel 12 (Vergleichspeispiel):**

| | |
|---|---|
| 65,5 Teile | C.I. Pigment Yellow 184 (Sicopal® Gelb L 1100, Fa. BASF, Komponente (A)), |
| 10,0 Teile | Mischung eines anionischen und nichtionischen Dispergiermittels (Dispersogen® AN 200, Fa. Clariant, Komponente (B)), |
| 0,2 Teile | 2-(*sec*-Butylamino)ethanol ((Alpamine® N41, Firma Arkema), Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 17,8 Teile | Wasser (Komponente (F)) |

**Beispiel 13:**

| | |
|---|---|
| 65,5 Teile | C.I. Pigment Yellow 184 (Sicopal® Gelb L 1100, Fa. BASF, Komponente (A)), |
| 10,0 Teile | Mischung eines anionischen und nichtionischen Dispergiermittels (Dispersogen® AN 200, Fa. Clariant, Komponente (B)), |
| 1,4 Teile | Verbindung der Formel (I) mit R = H (30 %-ige wässrige Lösung, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 16,6 Teile | Wasser (Komponente (F)) |

**Beispiel 14:**

| | |
|---|---|
| 65,5 Teile | C.I. Pigment Yellow 184 (Sicopal® Gelb L 1100, Fa. BASF, Komponente (A)), |
| 10,0 Teile | Mischung eines anionischen und nichtionischen Dispergiermittels (Dispersogen AN® 200, Fa. Clariant, Komponente (B)), |
| 1,4 Teile | Verbindung der Formel (I) mit R = CH₃ (50 %-ige wässrige Lösung, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 16,6 Teile | Wasser (Komponente (F)) |

Zur Charakterisierung der Dispersionen wurden diese zunächst 7 Tage bei 60 °C gealtert; dabei waren alle Pasten über den Zeitraum stabil. Des Weiteren wurde die Viskosität der Pigmentdispersionen auf einem Haake VT 550-Rheometer bei einer Scherrate von 1/60s und einer Temperatur von 23 °C bestimmt. Die Ergebnisse sind in Tabelle 3 aufgeführt und weisen eine pigment-typische Viskosität auf.

Zur Bestimmung der Kompatibilität der Pigmentdispersionen mit Basis verschiedenen Basisbeschichtungen, wurden 2 Gew.-% der Dispersion in die Farben und Lacke A-D (Tabelle 2) eingerührt, mit 200 µm auf einen Kontrastkarton aufgezogen und die Farbstärke bestimmt. Die Ergebnisse der Farbstärken sind in Tabelle 3 aufgeführt und weisen sowohl für Rot (Beispiele 8 und 9), als auch für Gelb (Beispiele 13 und 14) höchste Farbstärken für die erfindungsgemäßen Polyhydroxy-Amine der Formel (I) auf. Die Pasten mit 2-(*sec*-Butylamino)ethanol (Vergleichsbeispiele 7 und 12) sind mit lösemittelhaltigen Beschichtungen inkompatible und führen zur Ausflockung in der Anwendung und sind somit farbmetrisch nicht zu erfassen.

**Tabelle 2: Verwendete Beschichtungen zur Kompatibilitätsprüfung**

| Farbe/Lack | Beschreibung |
|---|---|
| A | Wässriger Klarlack auf Basis einer Acrylat- und Polyurethan-Dispersion. |
| | Festkörpergehalt: 40 % |
| B | Wässriger Klarlack auf Basis einer Polyurethan-Dispersion. |
| | Festkörpergehalt: 35 % |
| C | Lösemittelhaltiger Alkydharz-Klarlack auf Basis von Ölen und aliphatischem Lösemittel. |
| | Festkörpergehalt: 39 % |
| D | Lösemittelhaltiger Alkydharz-Klarlack auf Basis aliphatischer Lösemittel. |
| | Festkörpergehalt: 37 % |

Angaben zu Teilen oder Prozenten stellen Gewichtsteile oder Gewichtsprozente dar, sofern nicht anders angegeben.

**Tabelle 3: Ergebnisse der Beispiele 5 bis 14**

| Beispiel | Äußere Erscheinung | pH-Wert | Viskosität [mPas] | Farbstärke / Beschichtung [%] | | | |
|---|---|---|---|---|---|---|---|
| | | | | A | B | C | D |
| 5 (V) | Flüssig und homogen | 8,1 | 455 | 96 | 97 | 93 | 81 |
| 6 (V) | Flüssig und homogen | 8,1 | 513 | 96 | 98 | 88 | 81 |
| 7 (V) | Thixotrop und schaumig | 8,1 | 521 | 98 | 95 | ausgeflockt | ausgeflockt |
| 8 | Flüssig und homogen | 8,1 | 638 | 100 | 99 | 97 | 92 |
| 9 | Flüssig und homogen | 8,1 | 558 | 100 | 100 | 100 | 100 |
| 10 (V) | Flüssig und homogen | 8,5 | 243 | 96 | 99 | 96 | 98 |
| 11 (V) | Flüssig und homogen | 8,5 | 176 | 92 | 97 | 96 | 97 |
| 12 (V) | Leichter Bodensatz | 8,5 | 135 | 69 | 65 | ausgeflockt | ausgeflockt |
| 13 | Flüssig und homogen | 8,5 | 311 | 94 | 95 | 102 | 103 |
| 14 | Flüssig und homogen | 8,5 | 256 | 100 | 100 | 100 | 100 |

Für Weißpigmente ist die Bestimmung der Farbstärke bei Klarlacken ungeeignet. Hier eignet sich vielmehr die Bestimmung des Deckvermögens als Nachweis der Feinverteilung des Pigments im Farbfilm; eine komplette Unverträglichkeit führt zur Verkapselung des Pigments und der Farbfilm erscheint klar (kein oder kaum Deckvermögen vorhanden). Dazu wurden die nachstehenden Pigmentdispersionen (Beispiele 11 bis 15) mit Weißpigment hergestellt und im Anschluss wurde das Deckvermögen bestimmt. Dazu wurden die farblosen Grundfarben mit 10 Gew.-% der Titandispersionen versetzt und es wurde ein 400 µm Farbfilm auf einem Schwarz-Weiß-Kontrastkarton ausgezogen. Nach Trocknung wurde der Kontrast zwischen dem weißen und schwarzen Bereich bestimmt.

**Beispiel 15 (Vergleichsbeispiel):**

| | |
|---|---|
| 65,5 Teile | C.I. Pigment White 6 (Kronos® 2160, Fa. Kronos, Komponente (A)), |
| 10,0 Teile | Mischung eines anionischen und nichtionischen Dispergiermittels (Dispersogen® AN 200, Fa. Clariant, Komponente (B)), |
| 0,3 Teile | 2-Amino-2-methyl-propan-1-ol (95 %-ige wässrige Lösung, AMP-95, Fa. Angus, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 17,7 Teile | Wasser (Komponente (F)) |

**Beispiel 16 (Vergleichsbeispiel):**

| | |
|---|---|
| 65,5 Teile | C.I. Pigment White 6 (Kronos® 2160, Fa. Kronos, Komponente (A)), |
| 10,0 Teile | Mischung eines anionischen und nichtionischen Dispergiermittels (Dispersogen® AN 200, Fa. Clariant, Komponente (B)), |
| 0,8 Teile | 2-(*sec*-Butylamino)ethanol ((Alpamine® N41, Firma Arkema), Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 17,2 Teile | Wasser (Komponente (F)) |

**Beispiel 17:**

| | |
|---|---|
| 65,5 Teile | C.I. Pigment White 6 (Kronos® 2160, Fa. Kronos, Komponente (A)), |
| 10,0 Teile | Mischung eines anionischen und nichtionischen Dispergiermittels (Dispersogen® AN 200, Fa. Clariant, Komponente (B)), |
| 1,5 Teile | Verbindung der Formel (I) mit R = H (30 %-ige wässrige Lösung, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 16,5 Teile | Wasser (Komponente (F)) |

**Beispiel 18:**

| | |
|---|---|
| 65,5 Teile | C.I. Pigment White 6 (Kronos® 2160, Fa. Kronos, Komponente (A)), |
| 10,0 Teile | Mischung eines anionischen und nichtionischen Dispergiermittels (Dispersogen® AN 200, Fa. Clariant, Komponente (B)), |
| 1,3 Teile | Verbindung der Formel (I) mit R = CH₃ (50 %-ige wässrige Lösung, Komponente (C)), |
| 6,0 Teile | Glycerinethoxylat mit einem Molekulargewicht von 300 g/mol (Polyglykol G 300, Fa. Clariant, Komponente (D)), |
| 0,3 Teile | Entschäumer (Byk-018, Fa. Byk, Komponente (E)), |
| 0,2 Teile | Konservierungsmittel (Acticide MBS, Fa. Thor, Komponente (E)), |
| 16,7 Teile | Wasser (Komponente (F)) |

Die Ergebnisse der Deckkraft-Bestimmung sind in Tabelle 4 aufgeführt. Pigmentdispersionen mit Polyhydroxy-Aminen der Formel (I) eignen sich universell zur Generierung von Deckkraft in wässrigen als auch lösemittelhaltigen Beschichtungen.

Polyhydroxy-Aminen der Formel (I) eignen sich als Neutralisationsmittel für wässrige Pigmentdispersionen, ohne dabei zum VOC-Gehalt beizutragen. Die Pasten eignen sich sowohl zum Einfärben von wässrigen, wie auch lösemittelhaltigen Farben, Lacken und Beschichtungen, indem die Polyhydroxy-Aminen der Formel (I) für höchste Farbakzeptanz sorgen und als Vermittler zwischen lösemittelhaltigen und wässrigen Systemen agieren.

**Tabelle 4: Ergebnisse der Beispiele 15 bis 18.**

| Beispiel | Äußere Erscheinung | pH-Wert | Viskosität [mPas] | Deckkraft / Beschichtung [%] | | | |
|---|---|---|---|---|---|---|---|
| | | | | A | B | C | D |
| 15 (V) | pastös und homogen | 9,0 | 1949 | 97 | 98 | 97 | 98 |
| 16 (V) | thixotrop und homogen | 9,0 | 1621 | 96 | 97 | ausgeflockt | ausgeflockt |
| 17 | pastös und homogen | 9,0 | 3348 | 98 | 98 | 98 | 98 |
| 18 | pastös und homogen | 9,0 | 4911 | 99 | 99 | 99 | 99 |

## Patentansprüche

1. Wässrige, bindemittelfreie Pigmentdispersionen, enthaltend
(A) mindestens ein organisches und/oder anorganisches Pigment,
(B) ein oder mehrere Dispergiermittel und/oder Tenside
(C) mindestens eine Verbindung der Formel (I) 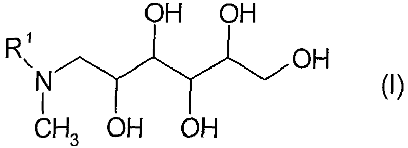 worin R¹ für H, C₁-C₄-Alkyl, CH₂CH₂OH oder CH₂CH(CH₃)OH steht, und
(F) Wasser.

2. Wässrige, bindemittelfreie Pigmentdispersion nach Anspruch 1, worin R¹ für Methyl oder CH₂CH₂OH steht.

3. Wässrige, bindemittelfreie Pigmentdispersion nach Anspruch 2, worin R¹ für Methyl steht.

4. Wässrige, bindemittelfreie Pigmentdispersion nach einem oder mehreren Ansprüchen 1 bis 3, **dadurch gekennzeichnet, dass** das anorganische Pigment ein Metalloxid Pigment ist.

5. Wässrige, bindemittelfreie Pigmentdispersion nach einem oder mehreren Ansprüchen 1 bis 4, **dadurch gekennzeichnet, dass** der pH-Wert der Pigmentdispersion größer als 7 ist.

6. Wässrige, bindemittelfreie Pigmentdispersion nach Anspruch 5, **dadurch gekennzeichnet, dass** der pH-Wert der Pigmentdispersion zwischen 8 und 10 ist.

7. Wässrige, bindemittelfreie Pigmentdispersion nach einem oder mehreren der Ansprüche 1 bis 6, enthaltend 5 bis 80 Gew.-% an Komponenten (A) bezogen auf das Gesamtgewicht der Pigmentdispersion.

8. Wässrige, bindemittelfreie Pigmentdispersion nach einem oder mehreren Ansprüchen 1 bis 7 enthaltend 0,1 bis 30 Gew.-% an Komponenten (B) bezogen auf das Gesamtgewicht der Pigmentdispersion.

9. Wässrige, bindemittelfreie Pigmentdispersion nach einem oder mehreren Ansprüchen 1 bis 8 enthaltend 0,1 bis 10 Gew.-% an Komponenten (C) bezogen auf das Gesamtgewicht der Pigmentdispersion.

10. Wässrige, bindemittelfreie Pigmentdispersion nach einem oder mehreren Ansprüchen 1 bis 9 enthaltend ein oder mehrere Polyalkylenglykole als Komponente (D) in einer Menge von 0,1 bis 10 Gew-% bezogen auf das Gesamtgewicht der Pigmentdispersion.

11. Wässrige, bindemittelfreie Pigmentdispersion nach einem oder mehreren Ansprüchen 1 bis 10 enthaltend weitere zur Herstellung wässriger Pigmentdispersionen übliche Zusatzstoffe als Komponenten (E) in einer Menge von 0 bis 30 Gew-% bezogen auf das Gesamtgewicht der Pigmentdispersion.

12. Wässrige, bindemittelfreie Pigmentdispersion nach einem oder mehreren Ansprüchen 1 bis 11, **dadurch gekennzeichnet, dass** ihr nach DIN 11890-2 gemessener VOC-Gehalt kleiner als 0,2 % ist.

13. Verwendung einer wässrigen, bindemittelfreien Pigmentpräparation nach einem oder mehreren der Ansprüche 1 bis 12 zum Einfärben von wässrigen, wasserverdünnbaren und lösemittelhaltigen Lacken, Farben und Tinten.

## Claims

1. Aqueous, binder-free pigment dispersions comprising
(A) at least one organic and/or inorganic pigment,
(B) one or more dispersants and/or surfactants,
(C) at least one compound of the formula (I) 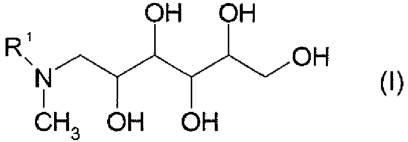 in which R¹ is H, C₁-C₄-alkyl, CH₂CH₂OH or CH₂CH(CH₃)OH, and
(F) water.

2. Aqueous, binder-free pigment dispersions according to Claim 1, in which R¹ is methyl or CH₂CH₂OH.

3. Aqueous, binder-free pigment dispersions according to Claim 2, in which R¹ is methyl.

4. Aqueous, binder-free pigment dispersions according to one or more of Claims 1 to 3, wherein the inorganic pigment is a metal oxide pigment.

5. Aqueous, binder-free pigment dispersions according to one or more of Claims 1 to 4, wherein the pH of the pigment dispersion is greater than 7.

6. Aqueous, binder-free pigment dispersions according to Claim 5, wherein the pH of the pigment dispersion is between 8 and 10.

7. Aqueous, binder-free pigment dispersions according to one or more of Claims 1 to 6, comprising 5% to 80% by weight of components (A) based on the total weight of the pigment dispersion.

8. Aqueous, binder-free pigment dispersions according to one or more of Claims 1 to 7, comprising 0.1% to 30% by weight of components (B) based on the total weight of the pigment dispersion.

9. Aqueous, binder-free pigment dispersions according to one or more of Claims 1 to 8, comprising 0.1% to 10% by weight of components (C) based on the total weight of the pigment dispersion.

10. Aqueous, binder-free pigment dispersions according to one or more of Claims 1 to 9, comprising one or more polyalkylene glycols as component (D) in an amount of 0.1% to 10% by weight, based on the total weight of the pigment dispersion.

11. Aqueous, binder-free pigment dispersions according to one or more of Claims 1 to 10, comprising further additives customary for production of aqueous pigment dispersions as components (E) in an amount of 0% to 30% by weight, based on the total weight of the pigment dispersion.

12. Aqueous, binder-free pigment dispersions according to one or more of Claims 1 to 11, wherein the VOC content thereof, measured according to DIN 11890-2, is less than 0.2%.

13. Use of an aqueous, binder-free pigment preparation according to one or more of Claims 1 to 12 for coloring aqueous, water-thinnable and solventborne varnishes, paints and inks.

## Revendications

1. Dispersions de pigment aqueuses exemptes de liant, contenant
(A) au moins un pigment organique et/ou inorganique,
(B) un ou plusieurs agents de dispersion et/ou tensioactifs
(C) au moins un composé de formule (I) 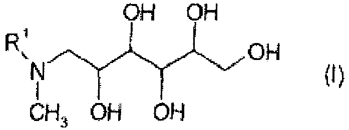 dans laquelle R¹ représente H, C₁₋₄-alkyle, CH₂CH₂OH ou CH₂CH(CH₃)OH, et
(F) de l'eau.

2. Dispersion de pigment aqueuse exempte de liant selon la revendication 1, R¹ représentant méthyle ou CH₂CH₂OH.

3. Dispersion de pigment aqueuse exempte de liant selon la revendication 2, R¹ représentant méthyle.

4. Dispersion de pigment aqueuse exempte de liant selon une ou plusieurs des revendications 1 à 3, **caractérisée en ce que** le pigment inorganique est un pigment d'oxyde métallique.

5. Dispersion de pigment aqueuse exempte de liant selon une ou plusieurs des revendications 1 à 4, **caractérisée en ce que** la valeur de pH de la dispersion de pigment est supérieure à 7.

6. Dispersion de pigment aqueuse exempte de liant selon la revendication 5, **caractérisée en ce que** la valeur de pH de la dispersion de pigment se situe entre 8 et 10.

7. Dispersion de pigment aqueuse exempte de liant selon une ou plusieurs des revendications 1 à 6, contenant 5 à 80 % en poids de composants (A) par rapport au poids total de la dispersion de pigment.

8. Dispersion de pigment aqueuse exempte de liant selon une ou plusieurs des revendications 1 à 7, contenant 0,1 à 30 % en poids de composants (B) par rapport au poids total de la dispersion de pigment.

9. Dispersion de pigment aqueuse exempte de liant selon une ou plusieurs des revendications 1 à 8, contenant 0,1 à 10 % en poids de composants (C) par rapport au poids total de la dispersion de pigment.

10. Dispersion de pigment aqueuse exempte de liant selon une ou plusieurs des revendications 1 à 9, contenant un ou plusieurs polyalkylèneglycols en tant que composant (D) en une quantité de 0,1 à 10 % en poids par rapport au poids total de la dispersion de pigment.

11. Dispersion de pigment aqueuse exempte de liant selon une ou plusieurs des revendications 1 à 10 contenant d'autres additifs habituels pour la préparation de dispersions de pigment aqueuses en tant que composants (E) en une quantité de 0 à 30 % en poids par rapport au poids total de la dispersion de pigment.

12. Dispersion de pigment aqueuse exempte de liant selon une ou plusieurs des revendications 1 à 11, **caractérisée en ce que** sa teneur en COV mesurée selon la norme DIN 11890-2 est inférieure à 0,2 %.

13. Utilisation d'une préparation de pigment aqueuse exempte de liant selon une ou plusieurs des revendications 1 à 12 pour la coloration de laques, de colorants et d'encres aqueux, diluables dans l'eau et contenant un solvant.
